# EUROPEAN PATENT APPLICATION

(11) **EP 1 935 478 A1**
(43) Date of publication of application: **25.06.2008**
(21) Application number: 06026488.4
(22) Date of filing: 20.12.2006
(51) Int. Cl.: B01D 53/86, B01J 21/04, B01J 23/02, B01J 23/00

(54) **Gaseous organic compound disposal system and method**

(71) Applicant: Oxy Japan Corporation, Tokyo 102-0083 (JP)
(72) Inventor: Torimoto, Yoshifumi, c/o Oxy Japan Corp., Tokyo 102-0083 (JP)
(74) Representative: Vossius & Partner

(57) **Abstract**

The invention provides a gaseous organic compound disposal system comprising an oxidizing portion which dispenses with heating means and operates at normal temperature, and on or in which an oxidizing catalyst containing 12CaO · 7Al₂O₃ is carried or filled at a position in contact with a gas feed containing gaseous organic compounds.

## Description

The present invention relates generally to a gaseous organic compound disposal system and method, and more particularly to a system and method for oxidization of organic compounds that are volatile at normal temperature.

Regarding organic substances that are volatile at normal temperature and abbreviated as VOC, the WHO define them on the basis of their boiling points, classifying those having a boiling point ranging from (0 to 50 °C) to 100 °C as an ultra-volatile organic compounds, those having a boiling point ranging from (50 to 100 °C) to (240 to 260 °C) as volatile organic compounds, and those having a boiling point ranging from (240 to 260°C) to (380 to 400°C) as semi-volatile organic compounds.
There is the mention,as typical substances,of formaldehyde, toluene, xylene, p-dichlorobenzene, ethyl-benzene, styrene, chlorpyrifos, di-n-butyl phthalate, tetradecane, phthalic acid 2-hexyl, diazinon, acetaldehyde, etc.
These volatile organic matters are thought of as substances responsible for the sick house syndrome, and there are some methods proposed for removal of them from indoor air by decomposition or adsorption.
For instance, there is a method for oxidative decomposition of organic matters known, which uses a photocatalyst comprising titanium oxide to irradiate it with ultraviolet radiation light or visible light. For oxidative decomposition with this method, light irradiation is needed: irradiation with a given quantity of light is needed for activation of the photocatalyst.

It is also known that oxidative disposal of gaseous organic compounds is accelerated by using noble metals or metallic compounds as catalysts. Generally, however, such catalysts cost much, and for more efficient reactions to proceed, it is necessary to heat them to high temperatures.

There are some compounds including O₂⁻ ion radicals and O⁻ ion radicals that are active oxygen species having a useful action in the process of oxidization of organic matters. Among these, a 12CaO · 7Al₂O₃ crystal (hereinafter often called the C12A7) synthesized from calcium and aluminum is known to have O₂⁻ included in the crystal.

In particular, JP-A2002-3218 proposes firing the starting substances calcium oxide and aluminum oxide at a given firing temperature to obtain compounds including O₂⁻ ion radicals and O⁻ ion radicals at a concentration of as high as 10²⁰ cm⁻³ or even higher.
WO03/05037 proposes applying a potential on C12A7 at high temperatures to release an active oxygen species at several hundred °C, thereby utilizing it for oxidization reactions or the like.

Further, a catalyst composed mainly of C12A7 is proposed for the oxidative decomposition of particulate substances (PA) exhausted from diesel engines, and JP-A-2003-190787 shows that oxidative decomposition reactions take place at 400 to 500 °C with its mixture with a metal catalyst.

For the purpose of using a compound including an active oxygen species like C12A7 as an oxidizing catalyst or the like for oxidizing reactions, it has so far been considered essential to use it at several hundred °C or higher. It has been considered impossible to use it at normal temperature.
The present invention has for its object the provision of a system, method and catalyst for the oxidization of gaseous organic compounds taken as leading substances responsible for the sick house syndrome, with which efficient oxidizing reactions are achievable at normal temperature without recourse to any heating means.

The present invention provides a gaseous organic compound disposal system, characterized by including an oxidizing portion on or in which an oxidizing catalyst containing 12CaO·7Al₂O₃ is carried or filled at a position which is or may come in contact with a gas feed containing gaseous organic compounds. The gaseous organic compound disposal system according to the invention disperses with heating means and operates at normal temperature.
In one embodiment of the aforesaid gaseous organic compound disposal system, an adsorbent capable of adsorbing a product, particularly e.g. a product that is formed in the oxidation reaction, is located at said oxidizing portion.
In one embodiment of the aforesaid gas disposal system, the gaseous organic compound is at least one selected from the group consisting of formaldehyde, toluene, xylene, p-dichlorobenzene, ethyl-benzene, styrene, di-n-butyl phthalate, chlorpyrifos, and acetaldehyde.
In one embodiment of the aforesaid gas disposal system, the gaseous organic compound is an odorous component in the air.

The invention also provides a method for the disposal or removal of compound, wherein an oxidizing portion on or in which an oxidizing catalyst containing 12CaO · 7Al₂O₃ is carried or filled is located at a position in contact or brought in contact with a gas feed containing gaseous organic compounds, so that the gaseous organic compounds are oxidized without heating said oxidizing portion.
Further, the invention provides an air conditioner, wherein an oxidizing portion on or in which an oxidizing catalyst containing 12CaO· 7Al₂O₃ is carried or filled is located on an exchange fin of a heat exchanger, or other gas passage. The air conditioner dispenses with heating means and operates at normal temperature.
With the gas disposal system of the invention that includes an oxidizing catalyst capable of oxidizing gaseous organic compounds at normal temperature, it is possible to remove gaseous organic compounds in a building room, a car chamber or the like that are considered to be substances responsible for the sick house syndrome by oxidative decomposition without increasing temperatures due to heating means. It is thus possible to provide a system for which there is no need of energy supply from outside and which is easy to maintain.

The invention will be described with reference to the accompanying drawings, wherein like numbers reference like elements.

Fig. 1 illustrates a section of one embodiment of the gas disposal system according to the invention.

Fig. 2 illustrates a section of another embodiment of the gas disposal system according to the invention.

Fig. 3 illustrates a section of yet another embodiment of the gas disposal system according to the invention.

Fig. 4 illustrates a perspective on a further embodiment of the gas disposal system according to the invention.

Fig. 5 is illustrative of a further embodiment of the gas disposal system according to the invention, which is attached to an air conditioner.

According to the invention, it has now been found that the calcium oxide · aluminum oxide composite oxide including active oxygen (12CaO · 7Al₂O₃) has a function of oxidizing gaseous organic compounds even at normal temperature. Such phenomena are quite unexpected, and why C12A7 including an active oxygen species such as negatively charged oxygen atoms contributes to oxidizing reactions as an oxidizing catalyst or the like at normal temperature is still not fully clarified. However, a possible reason could be that the active oxygen species that is released if in a small amount contributes to the oxidizing reaction of a gaseous organic compound in contact with the surface of C12A7.
The "normal temperature" here is understood to mean a temperature at which there is no heat from any particular heating means. An exemplary temperature would be room temperature, typically in the range of 10 to 30°C, 15 to 25°C, or 18 to 23°C.

12CaO · 7Al₂O₃ used here may be synthesized from the staring material obtained by mixing together calcium and aluminum at an atomic equivalent ratio of 12:14, for instance, calcium carbonate, calcium hydroxide or calcium oxide and various forms of aluminum oxide in an oxidizing atmosphere. In particular, if the starting material obtained by mixing together calcium carbonate and γ-aluminum oxide at a molecular equivalent ratio of 12: 7 is subjected to a solid-phase reaction by heating at a given oxygen partial pressure and a limited vapor partial pressure, it is then possible to obtain synthetic 12CaO·7Al₂O₃ containing the included active oxygen species at an increased concentration.
Specifically, if the solid-state reaction takes place in an atmosphere having an oxygen partial pressure controlled to 10⁴ Pa or higher, preferably 10⁵ Pa or higher, and a water vapor partial pressure controlled to 10² Pa or lower, preferably 1 Pa or lower at a firing temperature of 1, 200 °C or higher, it is then possible to include the active oxygen species in 12CaO · 7Al₂O₃ at a concentration of 10²⁰ cm⁻³ or more.

The gas disposal system according to the invention preferably includes an oxidizing portion designed such that it is positioned on the surface of a carrier member in such a way as to let the gas that contains the gaseous organic compounds to be treated come in effective contact with C12A7, or C12A7 is filled in a space through which the gas passes, thus ensuring the contact of C12A7 with the passing gas. To increase the area of contact, it is preferable to use fine-powder particles having an increased surface area. To have an increased surface area, the fine-powder particles have preferably a particle diameter of 10 µm or greater, and especially 1 to 5 µm.
When C12A7 is carried on the carrier member, it may be coated on the carrier member surface by means of spraying of C12A7 fine powders. With spraying, the binder for forming a coating on the carrier member can be dispensed with, or used in a reduced amount, so that any reduction in the effective area of C12A7 can be minimized.

When there is the C12A7-filled oxidizing portion located in the space through which the gas passes, C12A7 may be filled in a porous member, comprising e.g. a tubular porous sheet, a glass wool filler or the like. Alternatively, C12A7 may be mixed into a glass wool member, e.g. in a cotton or unwoven form.

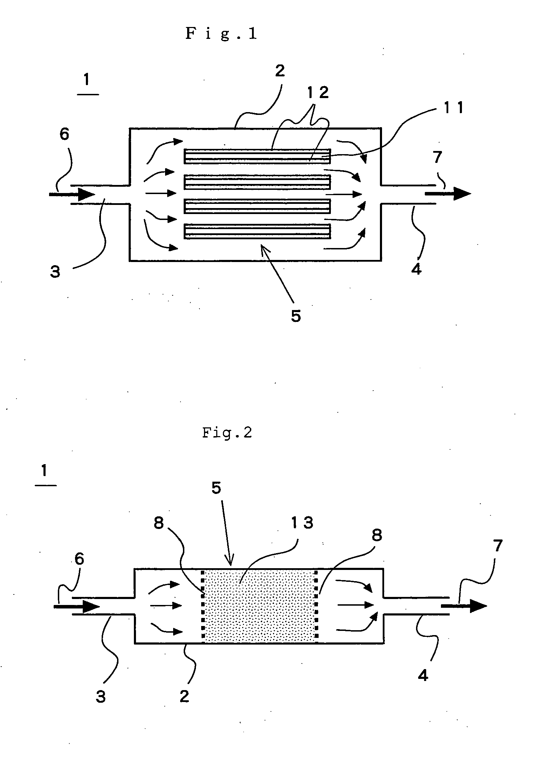

Fig. 1 illustrates a cross-section of one embodiment of the gas disposal system according to the invention.
A gas disposal system 1 is built up of a disposal chamber 2 having an inlet port 3 for a gas containing gaseous organic compounds, and an outlet port 4. In the disposal chamber 2, there is an oxidizing portion 5 provided, on the surface of which an oxidizing catalyst 12 comprising 12CaO· 7Al₂O₃ is located. In the oxidizing portion 5, the oxidizing catalyst 12 is carried on the surface of a ceramic member 11, and the ceramic member 11 has an increased area of contact in such a way as to facilitate smooth contact of the incoming gaseous organic compounds with the oxidizing catalyst 12.
A gas 6 containing gaseous organic compounds flowing in from the inlet port 3 is oxidized in the oxidizing portion 5, and a gas 7 treated there is discharged out of the outlet port 4.

Fig. 2 illustrates a cross-section of another embodiment of the gas disposal system according to the invention.
A gas disposal system 1 is built up of a disposal chamber 2 having an inlet port 3 for a gas containing gaseous organic compounds, and an outlet port 4, and there is an oxidizing portion 5 disposed in the disposal chamber 2. The oxidizing portion 5 is sectioned by a porous member 8 capable of letting the gas pass and holding the oxidizing catalyst particles 13 comprising 12CaO·7Al₂O₃.
A gas 6 containing gaseous organic compounds flowing in from the inlet port 3 is oxidized in the oxidizing portion 5, and a gas 7 treated there is discharged out of the outlet port 4.

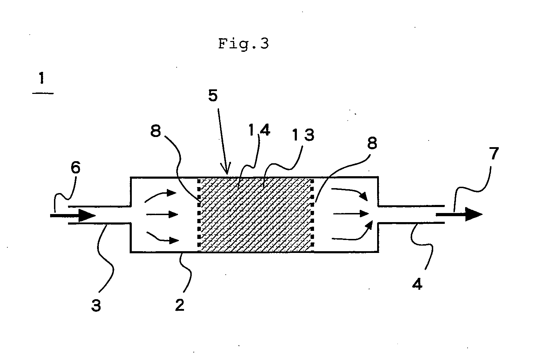

Fig. 3 illustrates a cross- section of yet another embodiment of the gas disposal system according to the invention.
A gas disposal system 1 shown in Fig. 3 is built up of an oxidizing portion 5 that is sectioned by a porous member 8 capable of letting a gas pass and holding a mixture of oxidizing catalyst particles 13 comprising 12CaO· 7Al₂O₃ with adsorbent particles 14.
A gas 6 containing gaseous organic compounds flowing in from the inlet port 3 is oxidized by the oxidizing catalyst particles 13 in the oxidizing portion 5.

However, as a product resulting from oxidization remains on the surface of the oxidizing catalyst particles 13, it will often work against the action of the oxidizing catalyst. To avoid this, the adsorbent particles 14 are provided in proximity to the oxidizing catalyst particles for adsorption of the product from oxidization. As a result, the reactions involved on the surface of the oxidizing catalyst particles 13 make so rapid progress that the oxidizing function can be kept from deteriorating.
It is noted here that the gaseous organic compounds to be oxidized are generally not removed by adsorption onto the adsorbent. This can be learned from the fact that the gaseous organic compounds are hardly adsorbed onto the adsorbent.
For instance, aldehydes are known to be little adsorbed onto active charcoal. Even with active charcoal used together with oxidizing catalyst particles, there is a decrease in the concentration of aldehydes: the addition of the adsorbent is not determined to the smooth oxidizing reactions on the oxidizing catalyst.

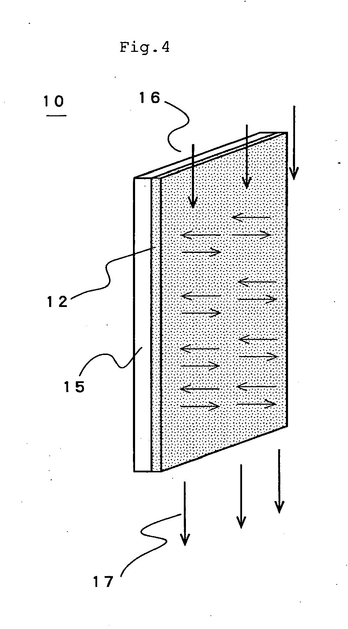

Fig. 4 illustrates a perspective on a further embodiment of the gas disposal system according to the invention.
More specifically, Fig. 4 is illustrative of a tile type gas disposal system, wherein an oxidizing catalyst 12 comprising 12CaO · 7Al₂O₃ is provided on the surface of a tiled carrier 15.
When the tile type gas disposal system 10 is attached to the wall surface of a room in the form of a part of the tiled wall surface, it is not necessary to rely upon any special heating means or the like: a gas 16 containing gaseous organic compounds and flowing down with convection of indoor air comes in contact with the oxidizing catalyst 12 provided on the surface of the tile type gas disposal system 10 so that that gas and, hence, the gaseous organic compounds are oxidized.

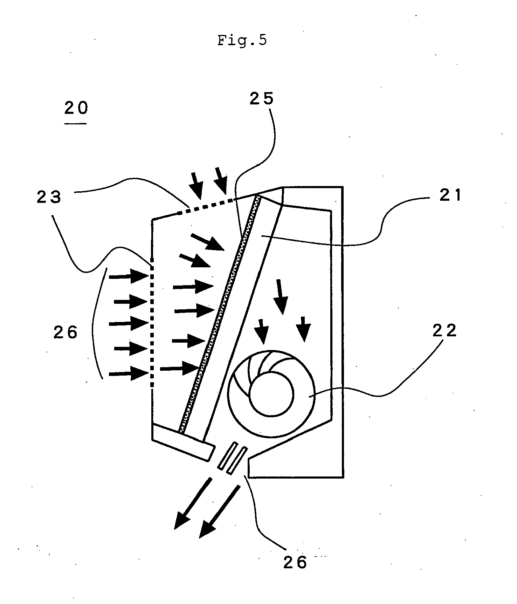

Fig. 5 is illustrative of a further embodiment of the gas disposal system according to the invention, which is attached to an air conditioner.
An air conditioner 20 has a heat exchanger 21 inside, a gas 26 containing gaseous organic compounds, fed from a gas inlet port 23 by means of a blower 22, comes in contact with an oxidizing catalyst 25 comprising 12CaO · 7Al₂O₃ provided on the surface of a fin or the like in a heat exchanger 21 for oxidization, and thereafter discharged out of an gas discharge portion 26.
As the gas disposal system of the invention is attached to an air conditioner in a room or car, it permits the indoor air to be purified, deodorized or otherwise treated.

The gaseous organic compounds treated according to the invention include formaldehyde, toluene, xylene, p-dichlorobenzene, ethylbenzene, styrene, di-n-butyl phthalate, chlorpyrifos or acetaldehyde, all considered to trigger the sick house syndrome, but also other organic compounds that are used as adhesives, paint solvents, wax solvents, plasticizers, insecticides, etc. and vaporized at normal temperature, such that they remain suspended in gaseous forms in the atmosphere. Further, substances that are present not only in a gas form or but also as a mist, aerosol or other forms in air as well as odorous components resulting from organic matters can be treated according to the invention.

### Example 1

Ten grams of calcium oxide aluminum oxide composite oxide (12CaO · 7Al₂O₃) particles having an average particle diameter of 10 µm were filled in a glass tube of 10 mm in inside diameter with glass wool attached to it. Then, helium containing 30 ppm of formaldehyde was passed through the glass tube at 25 °C and a flow rate of 10³ cm³/m.
Analysis of the gas discharged out of an outlet port in the glass tube with CG-MS (QP5050 made by Shimadzu Corporation.) indicated that formaldehyde was below the identification limit and the concentration of carbon dioxide was 30 ppm.

### Example 2

Oxidization was carried out following Example 1 with the exception that acetaldehyde was used instead of formaldehyde, indicating that the gas discharged out of the outlet port contained acetaldehyde at a concentration of 10 ppm and carbon dioxide at a concentration of 20 ppm.

### Example 3

Oxidization was carried out following Example 1 with the exception that dry air was used in place of helium. Analysis of the outlet gas composition indicated that the concentration of formaldehyde was 5 ppm.

### Example 4

A mixture of ten grams of calcium oxide · aluminum oxide composite oxide (12CaO · 7Al₂O₃) particles having an average particle diameter of 10 µm and ten grams of active charcoal having an average particle diameter of 5 mm and a specific surface area of 600 m²/g was filled in a glass tube of 10 mm in inside diameter with glass wool attached to it. Then, a dry air containing 360 ppm of carbon dioxide with 10 ppm of formaldehyde poured in it was passed through the glass tube at 25 °C and a flow rate of 10³ cm³/m.

Analysis of the gas discharged out of an outlet port in the glass tube with CG-MS (QP5050 made by Shimadzu Corporation.) indicated that formaldehyde was below the identification limit and the concentration of carbon dioxide was 370 ppm.
In general; active charcoal is known to be less likely to adsorb aldehydes onto it, and it is apparent that the aldehydes are not adsorbed onto the active charcoal provided as an adsorbent. From the results of analysis, too, it is evident that the decrease in the concentration of aldehyde is achieved by oxidation, rather than by adsorption.

### Comparative Example 1

An outlet gas composition was analyzed as in Example 1 with the exception that aluminum oxide particles having an average particle diameter of 0.1 mm were used in lieu of 12CaO· 7Al₂O₃ particles. Consequently, the concentration of formaldehyde was found to be 30 ppm.

### Comparative Example 2

An outlet gas composition was analyzed as in Example 1 with the exception that aluminum oxide particles having an average particle diameter of 10 µm were used in lieu of 12CaO·7Al₂O₃ particles. Consequently, the concentration of formaldehyde was found to be 30 ppm.

With the gas disposal system of the invention wherein the calcium oxide · aluminum oxide composite oxide (12CaO · 7Al₂O₃) including oxygen is used as an oxidizing catalyst, it is possible to oxidize gaseous organic compounds contained in an indoor air without recourse to heating by heating means or the like.

## Claims

1. A gaseous organic compound disposal system, **characterized by** including an oxidizing portion which dispenses with heating means and on or in which an oxidizing catalyst containing 12CaO · 7Al₂O₃ is carried or filled at a position in contact with a gas feed containing gaseous organic compounds.

2. The gaseous organic compound disposal system according to claim 1, **characterized in that** an adsorbent capable of adsorbing a product is located at said oxidizing portion.

3. A method for the disposal of a gaseous organic compound, **characterized in that** an oxidizing portion on or in which an oxidizing catalyst containing 12CaO · 7Al₂O₃ is carried or filled is located at a position coming in contact with a gas feed containing gaseous organic compounds, so that the gaseous organic compounds are oxidized without heating said oxidizing portion.

4. An air conditioner, **characterized in that** an oxidizing portion on or in which an oxidizing catalyst containing 12CaO · 7Al₂O₃ is carried or filled and which dispenses with heating means is located on an exchange fin of a heat exchanger, or other gas passage.
